# FASCICULE DE BREVET EUROPEEN

(11) **EP 1 284 177 B1**
(45) Date de publication et mention de la délivrance du brevet: **15.11.2006**
(21) Numéro de dépôt: 02291983.1
(22) Date de dépôt: 07.08.2002
(51) Int. Cl.: B25J 19/00

(54) **Dispositif de maintien d'éléments de faisceau de transport d'énergie à un automate et son application à un robot de soudage**
Vorrichtung zum Halten eines Energie zuführenden Kabelbündels an einem Schweissroboter
Device for holding a bundle of energy supply cables on a welding robot

(30) Priorité: 14.08.2001 FR 0110804
(43) Date de publication de la demande: 19.02.2003
(73) Titulaire: Cimlec Industrie, 78130 Les Mureaux (FR)
(72) Inventeur: Garanchet, Gérard, 78130 Les Mureaux (FR); Georgeault, Bernard, 78130 Les Mureaux (FR)
(74) Mandataire: Fosse, Danièle

(56) Documents cités:
- DE-U- 9 217 659
- DE-U- 20 010 696
- FR-A- 2 724 866
- US-A- 4 705 243
- US-A1- 2002 007 692

## Description

L'invention concerne un dispositif de maintien d'éléments de faisceau de transport d'énergie pour automate comprenant des parties mobiles alimentées par ces éléments.

L'invention concerne encore un l'application d'un tel dispositif a un robot de soudage, et plus particulièrement à un robot de soudage pour l'industrie automobile, qui constitue l'application préférée de l'invention.

Dans le cadre de l'invention, le terme "élément de faisceau de transport d'énergie" doit être compris dans son sens le plus général.

Il concerne plus particulièrement des câbles électriques, généralement de forte section dans l'application préférée de l'invention, compte tenu des fortes intensités mises en oeuvre dans les applications de soudage.

Toujours dans le cas de l'application "soudage", il concerne aussi des conduites flexibles de transport de fluide.

Pour d'autres applications d'automatisme, il concerne également des conduites flexibles de transport d'air comprimé.

De même, toujours dans le cadre de l'invention, le terme "automate" recouvre de nombreux appareils : robots proprement dits, boîtiers de commande reliés à d'autres appareils par les éléments de faisceau précités, etc., de façon générale tout appareil comprenant une partie mobile alimentée par le faisceau précité.

Pour fixer les idées, on se placera dans ce qui suit dans le cas de l'application préférée de l'invention, à savoir un robot de soudage.

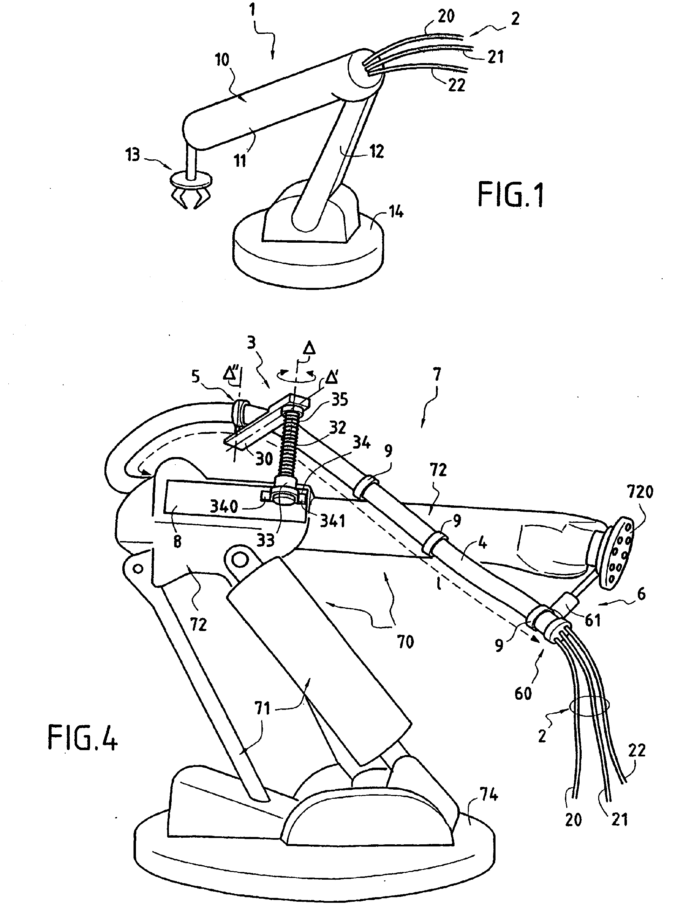

La figure 1 annexée à la présente description illustre très schématiquement un exemple un robot de soudage 1 selon l'art connu muni d'un faisceau de câble d'amenée de courant électrique.

Le robot de soudage comprend habituellement un châssis fixé au sol ou sur un support fixe 14. Il comprend également un bras articulé 10, constitué sur la figure 1 de deux membres 11 et 12, et, à l'extrémité libre du membre 11, un organe de soudage 13 à pinces. Il est naturellement prévu des organes de motorisation (non représentés) mettant mouvement relatif les divers éléments du bras et commandant la pince de soudage 13. On peut ainsi obtenir plusieurs degrés de liberté de mouvement. Le nombre de degrés de liberté dépend du type de robot utilisé et est adapté à l'application précise envisagée.

La fourniture de l'énergie nécessaire et éventuellement de signaux de commande est réalisée de façon habituelle à l'aide d'un faisceau 2 de câbles, trois dans l'exemple décrit sur la figure 1 : 20 à 22.

Comme il vient d'être indiqué, le faisceau comprend également des conduites flexibles pour le transport de fluide.

Notamment dans l'application préférée, mais pas exclusivement, les membres, 11 et 12, du bras 10 sont animés de mouvements relatifs rapides et répétés lors des processus de soudage. Il s'ensuit que les câbles, 20 à 22, du faisceau 2 sont également constamment sollicités et subissent des contraintes élevées : forces de traction et de torsion.

Il en résulte une durée de vie relativement faible.

En outre, les câbles, 20 à 22, du faisceau 2 ne sont maintenus que par leur base, points d'entrée dans le bras du robot 1.

Cette caractéristique nuit à la fiabilité des attaches.

Elle ne permet pas non plus d'optimiser les trajectoires des membres du bras du robot.

Des dispositifs de maintien d'élements de faisceau de transport d'énergie d'un automate sont connus de l'état de la technique. Le document DE 9217659U présente un tel dispositif comprenant deux bras souples.

L'invention vise à pallier les inconvénients des dispositifs de l'art connu, et dont certains viennent d'être rappelés.

L'invention se fixe pour but un dispositif de maintien d'éléments de faisceau de transport d'énergie pour automate comprenant des parties mobiles alimentées par ces éléments répondant aux besoins qui viennent d'être évoqués

Pour ce faire, les éléments précités, câbles ou conduites flexibles, sont supportés par un bras de renvoi, mobile en rotation autour d'un arbre assujetti à une partie mobile de l'automate par un premier organe de fixation. L'arbre est coaxial à un ressort, de type boudin ou similaire, dont une des extrémité est solidaire de l'organe de fixation, l'autre étant solidaire du bras de renvoi et exerce une force de rappel quand celui-ci s'écarte d'une position que l'on appellera initiale ou de repos.

Dans une variante préférée de l'invention, les éléments du faisceau sont en outre enfilés dans une gaine, avantageusement en plastique souple. La gaine accompagne le faisceau sur une longueur déterminée.

Enfin, toujours de façon préférentielle, l'extrémité de la gaine par laquelle sont introduits les éléments du faisceau est elle-même assujettie à l'automate par un second organe de fixation.

Cette disposition permet un maintien et un guidage efficace de l'élément de faisceau dans la zone de sortie.

Elle présente plusieurs avantages et notamment les avantages suivants :
- l'amélioration de la maintenabilité des faisceaux ;
- l'amélioration de la durée de vie des faisceaux, en particulier en réduisant les contraintes précitées de traction et de torsion ; et
- la réduction de l'encombrement des faisceaux autour des zones d'axes des robots, car ceux-ci sont mieux dirigés, ce qui permet d'accroître l'optimisation des trajectoires.

L'invention a donc pour objet principal un dispositif de maintien d'éléments de faisceau d'alimentation en énergie d'un automate comprenant au moins une partie mobile reliée au dit faisceau, caractérisé en ce qu'il comprend au moins un bras dit de renvoi, supportant au moins un élément dudit faisceau, en ce que une première extrémité dudit bras renvoi est mobile en rotation autour d'une première extrémité d'un arbre, suivant un premier axe, en ce que ledit arbre est assujetti, en une seconde extrémité, à un premier organe de fixation solidaire de ladite partie mobile, en ce que ledit arbre est associé à des moyens à ressort exerçant sur ledit bras de renvoi une force de rappel vers une position déterminée dans l'espace, dite de repos, par rapport au dit arbre, de manière à obtenir un maintien et un guidage dudit élément lors des déplacements dans l'espace de ladite partie mobile.

L'invention a encore pour objet l'application d'un tel dispositif à un robot de soudage dont le bras est alimenté par un faisceau de câbles d'amenée d'énergie électrique et de conduites flexibles véhiculant des fluides.

L'invention va maintenant être décrite de façon plus détaillée en se référant aux dessins annexés, parmi lesquels :
- la figure 1 illustre très schématiquement un exemple de robot de soudage alimenté en énergie électrique par un faisceau de câbles selon l'art connu ;
- les figures 2A à 2C illustrent schématiquement un dispositif de maintien de câbles électriques d'un faisceau selon un mode de réalisation préféré de l'invention ;
- la figure 3 illustre un second organe de maintien de câbles électriques d'un faisceau ; et
- la figure 4 illustre un robot de soudage muni d'un dispositif de maintien de faisceau selon un mode de réalisation préféré de l'invention.

Dans ce qui suit, sans en limiter en quoi que ce soit la portée, on se placera ci-après dans le cadre de l'application préférée de l'invention, sauf mention contraire, c'est-à-dire dans le cas d'un robot de soudage pour l'industrie automobile.

En soi, la configuration du robot de soudage est identique ou pour le moins très semblable à celle d'un robot de l'art connu. Les composants de ce robots ne nécessitent donc pas d'être re-décrits de façon détaillée.

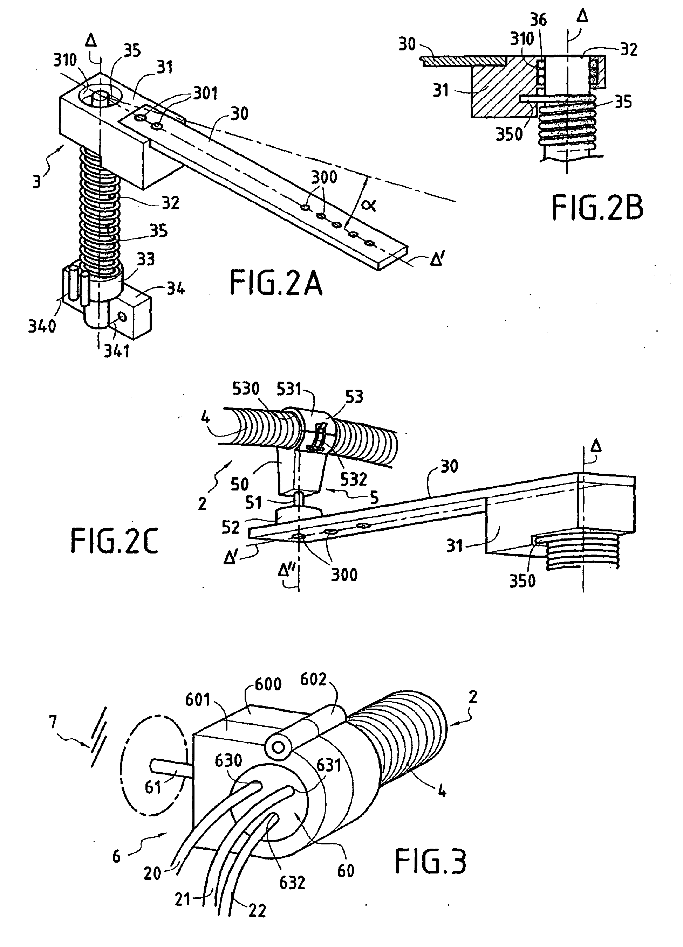

On va maintenant décrire, en se référant aux figures 2A à 4, un exemple de réalisation de dispositif 3 de maintien d'éléments de faisceau, en l'occurrence de câble d'alimentation d'énergie électrique, selon un mode de réalisation préféré de l'invention, et un exemple de robot 7 muni d'un tel dispositif 3.

Sur ces figures, les éléments identiques portent les mêmes références et ne seront re-décrits qu'en tant que de besoin.

La figure 2A illustre le dispositif 3 en perspective.

Selon une caractéristique principale, le dispositif 3 comprend un bras support 30, que l'on appellera de renvoi. De façon avantageuse, il est constitué par un membre parallélépipédique rectangle 30 assujetti en une extrémité à un bloc 31, également sensiblement parallélépipédique rectangle. La fixation est réalisée par tous moyens appropriés, vis ou autre, sous la référence unique 301. Le bloc 31 est percé de part en part, cavité 310, de façon à y loger un arbre 32, d'axe de symétrie Δ orthogonal au plan que forme le bras support 30.

Pour que ce dernier puisse se mouvoir en rotation libre autour de l'arbre 32, on prévoit avantageusement un roulement à billes 36 logé dans la cavité 310 ou tout organe de fonction similaire.

Selon une autre caractéristique importante, l'arbre 32 est associé à des moyens à ressort 35, avantageusement de type à boudin. Dans l'exemple décrit, l'arbre 32 est coaxial à au ressort 35. L'arbre 32 et le ressort 35 sont assujettis en leurs extrémités, que l'on dira arbitrairement inférieures, à un organe de fixation 34, le ressort étant en outre fixé par un clip ou tout autre organe 33. L'organe de fixation 34 est lui-même assujetti à l'automate, comme il le sera montré en regard de la figure 4, par tout moyen approprié, vis ou autre, 340 et 341.

La figure 2B est une figure de détail montrant le dispositif en coupe partielle, de façon à mettre en évidence la coopération de l'arbre de rotation 32, de l'extrémité correspondante du ressort 35 et du bloc 31 auquel est fixé le bras de renvoi 30.

De façon plus particulière, l'extrémité du ressort 35 se prolonge dans le bloc 31 par un doigt 350

De ce fait, si on se reporte de nouveau à la figure 2A, lorsque le bras de renvoi est mis en rotation autour de l'axe Δ et s'éloigne (angle α) d'une position que l'on appellera initiale ou de repos, symbolisée par un axe longitudinale Δ', le ressort 32 va être soumis à des efforts de torsion. Il s'ensuit que celui-ci, à son tour, exerce une force ou couple de rappel sur le bras de renvoi 30, via le doigt 350 et le bloc 31, qui tend à le ramener à la position de repos précitée, ce quelque soit le sens de l'angle α.

Selon une autre caractéristique importante encore, le faisceau 2 est rendu solidaire du bras de renvoi 30.

De façon préférentielle, l'assujettissement au bras de renvoi 30 n'est pas rigide.

La figure 2C illustre de façon plus particulière un exemple de réalisation préféré de moyens d'attache 5 du faisceau 2 au bras de renvoi 30.

Le bras de renvoi 30 est muni avantageusement d'un certain nombre de trous répartis le long de son axe longitudinal Δ'. Ces trous permettent de fixer sur sa paroi, que l'on appellera supérieure, de façon réglable, une platine 50 supportant l'extrémité dite inférieure d'un arbre de rotation 51 dont l'extrémité dite supérieure supporte elle-même, rotation libre, une bague de fixation 53 du faisceau.

De façon avantageuse, celle-ci est composée de deux demi-coques, 530 et 531, pouvant s'ouvrir, de manière à y introduire le faisceau 2. On prévoit également un organe de verrouillage/déverrouillage 532, de manière à solidariser les deux demi-coquilles, 530 et 531, lorsque le faisceau 2 est inséré entre celles-ci. Il peut s'agir d'un organe à boucle 532, de type levier, ou tout autre organe approprié.

Par ces dispositions, la bague de fixation 50 peut se mouvoir en rotation autour de l'axe de symétrie Δ" de l'arbre 51.

De façon préférentielle également, les câbles composant le faisceau 2 ne sont pas enfilés nus dans les moyens d'attache 5. On les enfile au préalable dans une gaine flexible 4, par exemple en plastique, du type "accordéon". Cette gaine 4 accompagne les câbles du faisceau 2 sur un longueur déterminée ℓ, à partir du bras de l'automate 7, comme il le sera montré ultérieurement par référence plus particulière à la figure 4.

Toujours de façon préférentielle, à l'extrémité libre de la gaine 4, comme illustré par la figure 3, on prévoit un organe de fixation 6 de cette extrémité à l'automate 7.

De façon avantageuse, l'organe de fixation 6 comprend une bague 60, de préférence double : deux réceptacles, 600 et 601 réunis par un organe de verrouillage/déverrouillage 602, par exemple à vis. Cette bague 60 emprisonne un organe, que l'on appellera "noix" 63, percé de part en part par des canaux, 630 à 632 dans l'exemple décrit. On enfile dans les canaux, 630 à 632, les différents câbles, 20 à 22, du faisceau 2. Le matériau constituant la "noix" 63 est un matériau souple, par exemple du plastique, de façon à maintenir les câbles, 20 à 22, sans les blesser.

La bague 60 comprend des moyens de fixation 61 à une zone appropriée de l'automate 7.

On va maintenant décrire un exemple d'automate muni dispositif de maintien de faisceau 2 du type qui vient d'être décrit en regard des figures 2A à 3, conformément à un mode de réalisation préféré de l'invention.

On a référencé sur la figure 4 que les composants nécessaires à la bonne compréhension de l'invention, l'automate, en soi pouvant être d'un type quelconque, notamment conforme à l'art connu.

Dans l'exemple décrit sur la figure 4, l'automate 7 consiste plus particulièrement en un appareil appelé manipulateur. Le système complet comprend en outre un appareil de commande (non représenté) d'où partent les câbles composant le faisceau 2.

Le manipulateur 7 comprend un bras articulé 70 comportant deux séries de membres reliées entre eux, 71 et 72. L'extrémité libre du bras 72 est munie d'un porte-outil 720 destiné, par exemple, à recevoir des pinces de soudage (non représentées). L'ensemble repose sur un châssis fixe 74.

Dans l'exemple décrit, le faisceau 2, dans sa gaine 4, entre dans le bras 70 par l'extrémité du bras 72 proche d'une zone d'articulation 721 entre les deux membres, 71 et 72.

Le dispositif 3 est disposé en partie supérieure du manipulateur 7, dans une zone du membre 72 proche de l'articulation 721.

On peut prévoir, en tant que de besoin, une platine de fixation 8, solidaire du membre 72, sur laquelle le dispositif est assujetti via l'organe de fixation 33-34.

Lorsque, notamment, le membre 72 se déplace dans l'espace, le dispositif 3 accompagne ces déplacements et guide et soutient efficacement le faisceau 2 dans sa gaine 4, l'une des extrémités de celle-ci étant prisonnière du membre 72.

Comme il a été décrit en regard de la figure 3, l'autre extrémité, dans une variante de réalisation préférée est assujettie, grâce aux moyens de fixation 6, à l'automate, de façon avantageuse à l'extrémité du membre 72.

On peut également prévoir des bagues de maintien intermédiaires 9, enfilées à intervalles réguliers le long de la gaine 4, la longueur de cette dernière étant égale à ℓ, à partir de l'entrée des câbles dans le membre 72.

La position exacte du dispositif 3 (et de son axe de rotation Δ) et la longueur du bras de renvoi 30 sont déterminées en fonction de divers paramètres qui dépendent de l'application envisagée, notamment des dimensions des composants du bras 70 et du degré de rotation à obtenir, de manière à ce que, quelles que soient les positions relatives des deux séries de membres 71 et 72, on obtienne le maintien et le guidage désirés du faisceau. De même, la raideur du ressort est déterminée en fonction des paramètres géométriques et autres associés au faisceau 2 (propre raideur du faisceau, sa masse, etc.).

A la lecture de ce qui précède, on constate aisément que l'invention atteint bien les buts qu'elle s'est fixés.

Il doit être clair cependant que l'invention n'est pas limitée aux seuls exemples de réalisations explicitement décrits, notamment en relation avec les figures 2A à 4.

Enfin, bien que le dispositif ait été décrit de façon détaillée dans le cas spécifique d'un bras articulé pour robot de soudage pour l'industrie automobile, l'invention, comme il a été précédemment indiqué, n'est en aucun cas limité à cette application particulière.

Le dispositif selon l'invention peut trouver application pour tout automate comprenant des parties mobiles alimentées par des éléments de faisceau d'amenée d'énergie, tant électrique que fluidique, comme il a été rappelé.

## Revendications

1. Dispositif de maintien d'éléments de faisceau d'alimentation en énergie d'un automate comprenant au moins une partie mobile reliée au dit faisceau, ce dispositif comprenant au moins un bras dit de renvoi (3), supportant au moins un élément (20-22) dudit faisceau (2),
**caractérisé en ce qu**'une première extrémité dudit bras de renvoi (30) est mobile en rotation autour d'une première extrémité d'un arbre (32), suivant un premier axe (Δ), en ce que ledit arbre (32) est assujetti, en une seconde extrémité, à un premier organe de fixation (33, 34) solidaire de ladite partie mobile (72), en ce que ledit arbre (32) est associé à des moyens à ressort (35) exerçant sur ledit bras de renvoi (30) une force de rappel vers une position déterminée dans l'espace (Δ'), dite de repos, par rapport au dit arbre (32), de manière à obtenir un maintien et un guidage dudit élément lors des déplacements dans l'espace de ladite partie mobile.

2. Dispositif selon la revendication 1, **caractérisé en ce que** lesdits moyens formant ressort sont constitués par un ressort à boudin (35) dans lequel est enfilé ledit arbre (32), **en ce que** ledit ressort à boudin (35) comporte un doigt (350) assujetti à un bloc support (31) dudit bras de renvoi (30) et est solidaire dudit premier organe de fixation (33-34) en une seconde extrémité, en ce le dit bloc support (31) comprend un organe de roulement (36) permettant ladite rotation de l'arbre (32) autour du premier axe (Δ) et **en ce que** ledit doigt (350) exerce ladite force de rappel sur ledit bras de renvoi (30) lorsque celui-ci s'écarte (α) de ladite position de repos, via ledit bloc support (31).

3. Dispositif, selon la revendication 1, **caractérisé en ce que** ledit bras de renvoi (30) est muni en une seconde extrémité de moyens d'attache (5) dudit faisceau (2) constitués par deux demi-coques (530, 531) dans lesquelles est enfilé ce faisceau (2) et **en ce que** ces demi-coques (530, 531) sont munies de moyens de verrouillage/déverrouillage (532).

4. Dispositif selon la revendication 3, **caractérisé en ce que** lesdits moyens d'attache (5) comprennent un arbre (51) et des moyens de fixation (52) au dit bras de renvoi (30), et **en ce que** lesdites demi-coques (530, 531) sont mobiles en rotation autour dudit arbre (51) suivant un deuxième axe de rotation (Δ").

5. Dispositif selon l'une quelconque des revendications précédentes, **caractérisé en ce que** ledit faisceau (2) est enfilé dans une gaine souple (4) sur une longueur déterminée (ℓ) à partir d'une desdites parties mobiles (72) dudit automate (7).

6. Dispositif selon la revendication 5, **caractérisé en ce que** l'extrémité de ladite gaine (4) opposée à ladite partie mobile (72) est munie d'un second organe de fixation (6) à une desdites parties mobiles (72) dudit automate (7).

7. Dispositif selon la revendication 6, **caractérisé en ce que** ledit second organe de fixation (6) comprend une bague (60) enserrant un organe de maintien (63) comportant des canaux (630-632) dans lesquels sont enfilés tout ou partie des éléments (20-22) dudit faisceau (2).

8. Dispositif selon l'une quelconque des revendications précédentes, **caractérisé en ce que** lesdits éléments sont des câbles flexibles (20-22) véhiculant une énergie électrique.

9. Dispositif selon l'une quelconque des revendications précédentes, **caractérisé en ce que** lesdits éléments sont des conduites flexibles véhiculant une énergie fluidique.

10. Application d'un dispositif selon l'une quelconque des revendications précédentes à un robot de soudage (1) pour l'industrie automobile.

## Claims

1. A device for retaining elements of a power supply harness of a robot, comprising at least one movable part connected to said harness, said device comprising at least one so-called countermotion arm (3) supporting at least one element (20-22) of said harness (2), **characterised in that** a first end of said countermotion arm (30) being capable of rotating motion about a first end of a shaft (32) disposed on a first axis (Δ), said shaft (32) being fixed, at a second end, to a first fastening member (33,34) attached to said movable part (72), said shaft (32) is associated with spring means (35) exerting on said countermotion arm (30) a restoring force towards a given position in space (Δ'), the so-called rest position, in relation to said shaft (32) so as to provide retention and guidance of said element during the displacement of said movable part in space.

2. A device according to claim 1, **characterised in that** said means forming a spring are formed by a coil spring (35) into which said shaft (32) is inserted, **in that** said coil spring (35) comprises a finger (350) fixed to a support block (31) of said countermotion arm (30) and is attached to said first fastening member (33-34) at a second end, **in that** said support block (31) comprises a bearing member (36) enabling the shaft (32) to rotate about the first axis (Δ), and **in that** said finger (350) exerts said restoring force on said countermotion arm (30) when the latter moves apart (α) from said rest position, via said support block (31).

3. A device according to claim 1, **characterised in that** said countermotion arm (30) is provided at a second end with attachment means (5) of said harness (2) formed by two half-shells (530,531) in which said harness (2) is inserted, and **in that** these half-shells (530,531) are provided with locking/unlocking means (532).

4. A device according to claim 3, **characterised in that** said attachment means (5) comprise a shaft (51) and fastening means (52) to said countermotion arm (30), and **in that** said half-shells (530,531) are capable of rotating motion about said shaft (51) disposed on a second axis of rotation (Δ").

5. A device according to any one of the preceding claims, **characterised in that** said harness (2) is inserted in a flexible sheath (4) over a given length (ℓ) starting from said movable parts (72) of said robot (7).

6. A device according to claim 5, **characterised in that** the end of said sheath (4) opposite said movable part (72) is provided with a second fastening member (6) to one of said movable parts (72) of said robot (7).

7. A device according to claim 6, **characterised in that** said second fastening member (6) comprises a ring (60) enclosing a retaining member (63) comprising passages (630-632) into which are inserted all or some of the elements (20-22) of said harness (2).

8. A device according to any one of the preceding claims, **characterised in that** said elements are flexible cables (20-22) conveying electric power.

9. A device according to any one of the preceding claims, **characterised in that** said elements are flexible ducts conveying fluid energy.

10. Application of a device according to any one of the preceding claims to a welding robot (1) for the automobile industry.

## Patentansprüche

1. Vorrichtung zum Halten von Elementen eines Energie zuführenden Kabelbündels eines Automaten, umfassend wenigstens ein bewegliches Teil, das mit besagtem Kabelbündel verbunden ist, wobei diese Vorrichtung wenigstens einen so genannten Rückstellarm (3) umfasst, der wenigstens ein Element (20-22) besagten Kabelbündels (2) trägt,
**dadurch gekennzeichnet, dass** ein erstes Ende besagten Rückstellarms (30) um ein erstes Ende einer Achse (32) gemäß einer ersten Achse (Δ) drehbar ist, **dadurch**, dass besagte Achse (32) fest gemacht ist an einem zweiten Ende an einem ersten Fixierungsorgan (33, 34), das verbunden ist mit besagtem beweglichen Teil (72), **dadurch**, dass besagte Achse (32) kombiniert ist mit Mitteln zur Federung (35), die auf besagten Rückstellarm (30) eine Rückholkraft in Richtung auf eine bestimmte Position im Raum (Δ'), Ruhestellung genannt, bezogen auf besagte Achse (32), ausüben, so dass ein Halten und ein Führen besagten Elements bei den Bewegungen im Raum von besagtem beweglichen Teil erzielt werden.

2. Vorrichtung gemäß Anspruch 1, **dadurch gekennzeichnet, dass** besagte Mittel, die eine Feder bilden, aus einer Schraubenfeder (35) bestehen, in die hinein besagte Achse (32) eingeführt ist, **dadurch**, dass besagte Schraubenfeder (35) einen Zapfen (350), der an einem Trägerblock (31) besagten Rückstellarms (30) fest gemacht ist, umfasst und an einem zweiten Ende mit besagtem ersten Fixierungsorgan (33-34) verbunden ist, **dadurch**, dass besagter Trägerblock (31) ein Wälzlagerorgan (36) umfasst, das besagte Drehung der Achse (32) um die erste Achse (Δ) herum ermöglicht, und **dadurch**, dass besagter Zapfen (350) über besagten Trägerblock (31) besagte Rückholkraft auf besagten Rückstellarm (30) ausübt, wenn dieser sich von besagter Ruhestellung entfernt (α).

3. Vorrichtung gemäß Anspruch 1, **dadurch gekennzeichnet, dass** besagter Rückstellarm (30) an einem zweiten Ende mit Mitteln zum Befestigen (5) besagten Kabelbündels (2) ausgestattet ist, die aus zwei Halbschalen (530, 531) bestehen, in die dieses Kabelbündel (2) eingeführt wird, und **dadurch**, dass diese Halbschalen (530, 531) mit Mittel zum Verriegeln/Entriegeln (532) ausgestattet sind.

4. Vorrichtung gemäß Anspruch 3, **dadurch gekennzeichnet, dass** besagte Mittel zum Befestigen (5) eine Achse (51) und Mittel zum Fixieren (52) an besagten Rückstellarm (30) umfassen, und **dadurch**, dass besagte Halbschalen (530, 531) um besagte Achse (51) herum gemäß einer zweiten Drehachse (Δ") drehbar sind.

5. Vorrichtung gemäß einem der vorhergehenden Ansprüche, **dadurch gekennzeichnet, dass** besagtes Kabelbündel (2) in eine flexible Umhüllung (4) über eine bestimmte Länge (t) ausgehend von einem der besagten beweglichen Teile (72) von besagtem Automaten (7) eingeführt ist.

6. Vorrichtung gemäß Anspruch 5, **dadurch gekennzeichnet, dass** das Ende besagter Umhüllung (4), das besagtem beweglichem Teil (72) gegenüber liegt, mit einem zweiten Organ zur Fixierung (6) an eines der besagten beweglichen Teile (72) von besagtem Automaten (7) ausgestattet ist.

7. Vorrichtung gemäß Anspruch 6, **dadurch gekennzeichnet, dass** besagtes zweites Fixierungsorgan (6) einen Ring (60) umfasst, der ein Halteorgan (63) umschließt, das Kanäle (630-632) umfasst, in die die Elemente (20-22) besagten Bündels (2) ganz oder teilweise eingeführt sind.

8. Vorrichtung gemäß einem der vorhergehenden Ansprüche, **dadurch gekennzeichnet, dass** besagte Elemente flexible Kabel (20-22) sind, die eine elektrische Energie befördern.

9. Vorrichtung gemäß einem der vorhergehenden Ansprüche, **dadurch gekennzeichnet, dass** besagte Elemente flexible Leitungen sind, die eine flüssige Energie befördern.

10. Anwendung einer Vorrichtung gemäß einem der vorhergehenden Ansprüche in einem Schweißroboter (1) für die Automobilindustrie.
